Europäisches Patentamt

European Patent Office

Office européen des brevets

(11) Publication number: **0 343 943 B1**

## EUROPEAN PATENT SPECIFICATION

(45) Date of publication of patent specification: **17.08.94**

(51) Int. Cl.⁵: **C08L 23/10**, //(C08L23/10, 23:20)

(21) Application number: **89305229.0**

(22) Date of filing: **23.05.89**

(54) **A composition comprising polymers of but-1-ene and propylene.**

(30) Priority: **24.05.88 US 198548**

(43) Date of publication of application:
**29.11.89 Bulletin 89/48**

(45) Publication of the grant of the patent:
**17.08.94 Bulletin 94/33**

(84) Designated Contracting States:
**AT BE CH DE ES FR GB GR IT LI LU NL SE**

(56) References cited:
**EP-A- 0 181 159**
**GB-A- 2 132 133**
**US-A- 3 972 964**

(73) Proprietor: **SHELL OIL COMPANY**
**900, Louisiana Street**
**Houston Texas 77002 (US)**

(72) Inventor: **Hwo, Charles C.**
**2710 Sugarwood**
**Sugarland Texas 77478 (US)**

(74) Representative: **Myerscough, Philip Boyd et al**
**J.A.KEMP & CO.**
**14, South Square**
**Gray's Inn**
**London WC1R 5LX (GB)**

Rank Xerox (UK) Business Services
(3.10/3.09/3.3.3)

## Description

The present invention relates to compositions comprising a high melt flow isotactic but-1-ene polymer and a propylene polymer. Such compositions are suitable for molding into shaped articles or for films, sheets or fibers. The films and sheets are either shrinkable or non-shrinkable and can be biaxially or monoaxially oriented. Furthermore, the compositions can be processed into tape.

Films of thermoplastic polymer compositions have found many commercial uses, particularly in packaging. One use of such films is in the production of shrink films and films for wrapping foods. Blown films are also popular in the commercial arena. Methods for producing blown film from commercial film grade polybutylene resins are described, for example, in Technical Bulletin SC:397-79 of Shell Chemical Company, "Processing Shell Polybutylene Film Grade Resins," published May 1979.

US-A-3,808,304 discloses heat sealable blends of but-1-ene homopolymers and polypropylene. It does not discuss using high melt index but-1-ene polymers prepared by peroxide cracking. In addition, it discloses that preferred blends comprise 20 to 80% by weight of polypropylene.

US-A-4,075,290 discloses heat sealable blends of 80 to 99% by weight of polybutylene and 1 to 20% by weight of polypropylene. The disclosure is limited to specified ranges of each polymer component.

US-A-4,345,004 claims a heat sealable blend prepared from copolymers of but-1-ene and ethylene from about 2 to 9% by weight of polypropylene and from about 0.02% to 1.5% by weight of high density polyethylene.

EP-A-0181159 describes compositions comprising a copolymer of propylene and an α-olefin, and a copolymer of 1-butene and an α-olefin having at least 5 C atoms

US-A-3972964 discloses a coating composition comprising an ethylene/propylene copolymer and a polybutene-1. US-A-3356765 discloses blends of polypropylene and a high molecular weight poly-1-butene from which sheets are formed.

The present invention provides a composition comprising 10% or less by weight of a low molecular weight, isotactic but-1-ene polymer, having a melt index from 50 to 1000, and at least 90% by weight of a propylene polymer.

The composition suitably further comprises from 0.1 to 1% by weight of an additive. The additive is typically at least one mold release agent, U. V. stabilizer, thermal stabilizer, filler, slip agent, antiblock agent, nucleating agent, pigment, antioxidant or flame retardant.

The but-1-ene polymer used in the compositions of the invention preferably has a melt index of from 150 to 225. Examples of suitable but-1-ene polymers include but-1-ene homopolymers and copolymers of but-1-ene and from 1 to 30 mole % of a $C_2$ - $C_8$ α-olefin.

The propylene polymer is suitably a propylene homopolymer, or a copolymer of propylene and from 1 to 30 mole % of a $C_2$ -$C_8$ α-olefin other than propylene. A preferred composition of the invention comprises 95% by weight of the propylene polymer and 5% by weight of the but-1-ene polymer.

The present invention further provides molded articles, sheets and films formed from the composition defined above in accordance with the invention. The molded articles are suitably molded by any conventional method, such as thermal molding or injection molding. Alternatively the articles may be blow molded using conventional blow molding techniques.

In addition the present invention provides fibers prepared from the composition as defined above in accordance with the invention. The fibers may be formed by any conventional method, such as the spin draw method.

The sheets formed from the compositions of the present invention have improved processing properties and good optical properties. These sheets can be biaxially oriented to give films having good optical properties. The number of scraps which result from making films with a biaxially stretched system is reduced in the present invention.

The blown articles formed from the compositions of the invention have high gloss and clarity compared with those formed from more conventional low melt index but-1-ene polymer blends. In addition, the fibers which are formed from the compositions of the invention exhibit improved stretchability over conventional fibers and are also capable of being spun. It is believed that the high melt index but-1-ene polymers act as a lubricant or plasticizer for the predominantly propylene polymer fibers.

The isotactic but-1-ene polymer referred to herein is a but-1-ene polymer comprising at least 95%, typically at least 97%, and preferably 98%, by weight of isotactic portions. Isotactic but-1-ene polymers having a low molecular weight, for example 300,000 or less as determined by solution viscosity in "Decalin" (decahydronophthalene), are particularly useful. Suitable but-1-ene polymers generally have a density of 914 to 919 kgm$^{-3}$, for example from 916 to 919 kgm$^{-3}$ and especially from 917 to 919 kgm$^{-3}$. They have melt indices in the range of from 50 to 1000, for example from 150 to 225 and particularly from 175 to 225

2

determined by ASTM D-1238 Condition E, at 190 °C.

As stated above, the but-1-ene polymers (PB) used in the invention are either but-1-ene homopolymers or copolymers. If but-1-ene copolymers are used, the non-butene comonomer content typically is from 1 to 30 mole % of either ethylene, propylene, or a $C_5$ - $C_8$ $\alpha$-olefin.

Suitable but-1-ene polymers can be prepared, for example, by the Ziegler-Natta low-pressure polymerization of but-1-ene. An example of such a process, disclosed in DE-A-1570353, comprises polymerizing but-1-ene with catalysts of $TiCl_3$ or $TiCl_3/AlCl_3$ and $Al(C_2H_5)_2Cl$ at temperatures of 10 to 50 °C, generally, 20 to 40 °C. High melt indices are then obtained by further processing the polymer by peroxide cracking.

An example of a but-1-ene polymer which is particularly suitable for the present invention is "PB0800", a developmental polymer produced by Shell Chemical Company, of Houston, Texas. This novel polymer is a homopolymer having a melt index of 200.

As stated above, the propylene polymers used in accordance with the invention are either propylene homopolymers or copolymers. If propylene copolymers are used, they are suitably either random or block copolymers. The comonomer content is typically from 1 to 30 mole % of ethylene, butene or a $C_5$ - $C_8$ $\alpha$-olefin. The propylene polymer typically has a melt index of 60 or less, preferably from 1 to 15 as measured by ASTM D-1238, Condition L at 230 °C. An example of a propylene polymer which is particularly suitable is "PP5C08" available from Shell Chemical Company, of Houston Texas. This polymer has a melt index of 2.8.

When the end use contemplated for the composition of the invention is a shrink film, random copolymers of propylene having a $C_2$ content of 3.5% by weight are particularly suitable. The high melt index PB used in the composition of the invention improves the stretching, processability and optical properties of these random copolymers and appears to result in a film having certain properties similar to those of vinyl.

When one or more additives as described above are added to the composition of the invention, the amount is from 0.1 to 1% by weight based on the total weight of the composition. The additive is suitably added to one or more of the principal components prior to their blending; alternatively, the additive is added during or after the blending of the principal components.

The components of the composition of the invention are blended by one of several methods. Examples include tumble blending, masterbatch, and melt compounding techniques. The particular method used to blend the components is only significant as regards the ultimate commercialization of the product. For example, it is in some cases desirable to use the least amount of energy to merge the components into an effective blend.

After blending, the compositions of the present invention can be formed into sheets, fibers or molded articles using conventional manufacturing equipment. Sheets are typically formed using conventional casting equipment, wherein the composition is cast, passed through a die and then placed into a solid phase pressure forming device which produces the sheets. Films can be prepared from the sheets by stretching or orienting the sheets or, alternatively, by using tubular film blown processing equipment. Such processing techniques are well known in the art. Articles can be formed directly from the composition of the invention or from the sheets using blow molding equipment.

The sheets and articles formed from the compositions of the invention can have a variety of shapes and varying cross-sectional thickness. For example, the gauge of a sheet is typically from 508 to 7620 m (20-300 mils). Examples of parts and articles that can be made from the composition include liquid containers, spouts for inflatable bags, car parts and other types of articles.

US-A-4,354,004 discloses suitable methods for converting compositions of the present invention into blow molded articles, such as bottles. The compositions can be processed on equipment designed for the manufacture of polypropylene articles, substantially in the same manner as other commercially molded polymer articles.

When compositions of the present invention are processed into fibers, conventional techniques are used such as the spin draw technique or the melt spinning technique. Monofilament or multifilament fibers may be produced. If multifilament fibers are prepared, 16 to 64 hole spinnerettes and Godet rollers to stretch the drawn filaments are typically used.

The present invention also includes laminates comprising a composition as defined above in accordance with the invention disposed on a substrate. The substrate is suitably nylon, polyester or polycarbon. An additional tie layer adhesive is optionally present between the substrate and the composition.

The following Examples further illustrate the invention. In the Tables following the Examples, Table I will show that improvement in particular stretch properties, and in some cases optical properties, has been achieved with the compositions of the invention as compared with a control composition of 100% polypropylene. Tables II and III will show that there is no significant difference in the water vapor transmission rate (WVTR) using the compositions of the invention compared with the control. Similarly, the tensile data will show that there is no significant reduction of the tensile properties for the composition of the invention comprising 5% by weight of but-1-ene polymer. As regards the processability of the compositions of the invention, less stretching force was required and the compositions were biaxially oriented more easily than with the control.

Tables II and III will show further results on the same biaxially oriented film. An improvement in the optical properties of the high flow but-1-ene polymer on propylene polymer film will be evident from the data. The stretching temperature of the compositions of the invention comprising PB modified PP films were lower than that of the control. A tubular film line was also used to assess the stretching ability in terms of bubble stability. An improvement for the high melt flow PB was observed.

EXAMPLE 1

Formulation I was prepared from 95 % by weight "PPC508"(PP), available from Shell Chemical Co. of Houston, Texas (a propylene homopolymer having a melt index of 2.8) and 5 % by weight "DP0800", (PB), a but-1-ene homopolymer also known as "WBS608" having a melt index of 200, and a developmental polymer of Shell Chemical Co. of Houston, Texas. The "PPC508" amd "PB0800" were dry-tumbled for about 1 hour in a drum at room temperature. The dry-tumbled blend was placed in a 31.75 mm single stage single screw Brabender extruder, with the screw having a mixing head disposed thereon. The compounding was run at a temperature from 215.5 to 232.2°C (420° to 450°F) and the mixture was given a residence time of about 5 minutes in the extruder. The mixture was extruded into a strand, cooled and chopped into pellets using conventional techniques. Sheets were then prepared by the casting process using a sheet processing line which consisted of a Killion extruder. Sheets were prepared of 508 m (20 mils) in thickness.

The sheets were tested on a biaxial stretcher. The stretcher was either an Iwamoto Film Stretcher available at the University of Akron or was a T.M. Long Stretcher available at the University of Tennessee. Sheet samples were drawn using a 4.4 stretch ratio. The stretching conditions on the sheet were as follows: Draw Temperature - 150°C, Draw Speed - 30 mm/sec or 54 mm/sec, Pre-heat time - 3 minutes, and grip force 860 to 1035 k Pa - (125-150 psi). Table I, which follows, provides the results of the stretching for Formulation I on the TM Long Stretcher as Samples 9-16, 29-32, 42, 50, 51, 53, 59, 62, 65, 70-72 and 84. In Tables II and III which follow, additional data is provided on tests performed on Formulation I using the Iwamoto film stretcher and the TM Long Stretcher respectively.

EXAMPLE 2

Formulation II was prepared from 90 % by weight "PPC508" (PP) and 10 % by weight "PB0800" (PB). Formulation II was prepared in a manner identical to Formulation I as described in 20 Example 1. Sheets of Formulation II were prepared in a manner identical to the Sheets of Formulation I, also as described in Example 1. Testing of formulation II was carried out on a biaxial stretcher under the same conditions described in Example 1. Table 1 which follows provides the results of the stretching of Formulation II on the TM Long Stretcher as stretched samples 17-24, 33-36, 38, 39, 41, 43-47, 54, 58, 60, 64, 73-76, 79, 80 and 83. In Tables II and III which follow, additional data is provided on tests performed on Formulation II using the Iwamoto and the TM Long Stretcher, respectively.

COMPARATIVE EXAMPLE

A composition was prepared as a control, comprising 100 % to "PPC508" polypropylene (PP). Samples of this control were tested as described in Example 1 for Formulation I. Table I which follows provides the results of the stretching of the control, as samples 1-8, 25-28, 37, 40, 48-49, 52, 55-57, 61, 63, 66-69, 77-78 and 81-82.

4

In Tables II and III which follow, additional data is provided on the properties of the control composition.

## TABLE 1

### COMPOSITIONS ACCORDING TO EXAMPLES 1 AND 2 AND THE COMPARATIVE EXAMPLE TESTED ON A T.M. LONG BIAXIAL FILM STRETCHER

| Sample No. | Composition (w%) | Draw Temp °C | Draw Speed (mm/sec) | Preheat Time (min) | Remark |
|---|---|---|---|---|---|
| 1 to 8 | 100 PP | 150 | 30 | 3 | Good stretching |
| 9 to 16 | 95 PP/5 PB | 150 | 30 | 3 | Good stretching |
| 17 to 24 | 90 PP/10 PB | 150 | 30 | 3 | Good stretching |
| 25 to 28 | 100 PP | 150 | 30 | 3 | Good stretching |
| 29 to 32 | 95 PP/5 PB | 150 | 30 | 3 | Good stretching |
| 33 to 36 | 90 PP/10 PB | 150 | 30 | 3 | Good stretching |
| 37 | 100 PP | 120 | 30 | 3 | Would not stretch |
| 38 | 90 PP/10 PB | 120 | 30 | 3 | Would not stretch |
| 39 | 90 PP/10 PB | 125 | 30 | 3 | Slightly stretch |
| 40 | 100 PP | 125 | 30 | 3 | Would not stretch |
| 41 | 90 PP/10 PB | 130 | 30 | 3 | Slightly stretch |
| 42 | 95 PP/5 PB | 130 | 30 | 3 | Slightly stretch |
| 43 | 90 PP/10 PB | 135 | 30 | 3 | Stretch half way |
| 44 | 90 PP/10 PB | 135 | 30 | 3 | Stretch half way |
| 45 | 90 PP/10 PB | 140 | 30 | 3 | Stretch 3/4 fully |
| 46 | 90 PP/10 PB | 145 | 30 | 3 | Good stretch |
| 47 | 90 PP/10 PB | 145 | 30 | 3 | Good stretch |
| 48 | 100 PP | 145 | 30 | 3 | Good stretch |
| 49 | 100 PP | 145 | 30 | 3 | Good stretch |
| 50 | 95 PP/5 PB | 145 | 30 | 3 | Good stretch |
| 51 | 95 PP/5 PB | 145 | 30 | 3 | Good stretch |
| 52 | 100 PP | 145 | 54 | 3 | Good stretch |
| 53 | 95 PP/5 PB | 145 | 54 | 3 | Good stretch |
| 54 | 90 PP/10 PB | 145 | 54 | 2 | Good stretch |
| 55 | 100 PP | 145 | 54 | 2 | Good stretch |
| 56 | 100 PP | 145 | 54 | 1 | Good stretch |
| 57 | 100 PP | 145 | 54 | 0.5 | OK but orange peel |
| 58 | 90 PP/10 PB | 145 | 54 | 0.5 | Good stretch |
| 59 | 95 PP/5 PB | 145 | 54 | 0.5 | Slight orange peel |
| 60 | 90 PP/10 PB | 140 | 54 | 3 | Good stretch |
| 61 | 100 PP | 140 | 54 | 3 | Slightly stretch |
| 62 | 95 PP/5 PB | 140 | 54 | 3 | Slightly stretch |
| 63 | 100 PP | 140 | 54 | 3 | Slightly stretch |
| 64 | 90 PP/10 PB | 140 | 54 | 3 | Good stretch |
| 65 | 95 PP/5 PB | 142.5 | 54 | 3 | Good stretch |
| 66 | 100 PP | 142.5 | 54 | 3 | Stretch half way |
| 67 | 100 PP | 145 | 54 | 3 | Good stretch |
| 68 | 100 PP | 145 | 54 | 0.5 | OK but orange peel |
| 69 | 100 PP | 145 | 54 | 0.5 | OK but orange peel |
| 70 | 95 PP/5 PB | 145 | 54 | 0.5 | Slight orange peel |
| 71 | 95 PP/5 PB | 145 | 54 | 0.5 | Slight orange peel |
| 72 | 95 PP/5 PB | 145 | 54 | 0.5 | Slight orange peel |

<u>TABLE 1 (cont'd)</u>

| | | | | | |
|---|---|---|---|---|---|
| 73 | 90 PP/10 PB | 145 | 54 | 0.5 | Good stretch |
| 74 | 90 PP/10 PB | 145 | 54 | 0.5 | Good stretch |
| 75 | 90 PP/10 PB | 145 | 54 | 0.5 | Good stretch |
| 76 | 90 PP/10 PB | 145 | 54 | 0.5 | Good stretch |
| 77 | 100 PP | 160 | 54 | 3 | OK but film hazy |
| 78 | 100 PP | 160 | 54 | 3 | OK but film hazy |
| 79 | 90 PP/10 PB | 160 | 54 | 3 | Uneven stretch |
| 80 | 90 PP/10 PB | 160 | 54 | 3 | Uneven stretch |
| 81 | 100 PP | 160 | 54 | 0.5 | Uneven but clear |
| 82 | 100 PP | 160 | 54 | 0.5 | Uneven but clear |
| 83 | 90 PP/10 PB | 160 | 54 | 0.5 | Uneven but clear |
| 84 | 95 PP/5 PB | 160 | 54 | 0.5 | Uneven but clear |

**PP is Shell PP508 (2.8 MF homopolymer) and PB is DURAFLEX[R]
Polybutylene WBS608 (200 MI)
These films were stretched using a T. M. Long Stretcher

6

## TABLE II

### FILM PROPERTIES OF COMPOSITIONS ACCORDING TO EXAMPLES 1 AND 2 AND THE COMPARATIVE EXAMPLE

| Property | 100 wt% PP5C08 Control | 95 wt% PP5C08 + 5 wt% PB0800 Formulation I | 90 wt% PP5C08 + 10 wt% PB0800 Formulation II |
|---|---|---|---|
| **Optics** | | | |
| Haze, % | 0.55 | 0.40 | 0.55 |
| Gloss (@60°) | 100 | 117 | 100 |
| Clarity, % | 69 | 75 | 76 |
| Specimen Thickness m (mil) | 11.43 (0.45) | 15.75 (0.62) | 11.43 (0.45) |
| **WVTR @37.8°C (100°F) & 90% RH** | | | |
| $kg/m^2/day$ ($g/100in^2/day$) | 0.014 (0.902) @8.89μm (0.35mil) | 0.0094 (0.605) @13.97μm (0.55mil) | 0.0096 (0.620) @10.16μm (0.40mil) |
| (g. mil/100 $in^2$/day) | (0.315) | (0.328) | (0.248) |
| **Mechanical** | | | |
| Tensile, kPa (psi) | $1.69 \times 10^5$ (24,540) | $1.71 \times 10^5$ (24,841) | $1.42 \times 10^5$ (20,545) |
| Elongation, % | 34 | 42 | 70 |
| Modulus, kPa (psi) (1% Secant) | $3.13 \times 10^6$ (453,458) | $3.01 \times 10^6$ (435,855) | $1.79 \times 10^6$ (260,183) |
| Stretching Force, Kg | 10-18 | 8-15 | 8-12 |

Haze was determined by a haze meter ASTM D1003.
Gloss was determined by ASTM D2457.
Clarity was determined by ASTM, D 1003.
WVTR was determined by ASTM E96.
Tensile was determined by ASTM D882.
Elongation was determined by ASTM D882.
Modulus was determined by ASTM D882.
Stretching Force was determined by the dial reading of the Iwamoto Stretcher.

These formulations were stretched using an Iwamoto Stretcher.

## TABLE III

### FILM PROPERTIES OF COMPOSITIONS ACCORDING TO EXAMPLES 1 AND 2 AND THE COMPARATIVE EXAMPLE

| Property | PP5C08 Control | PP5C08 + 5 wt% PB0800 | PP5C08 + 10 wt% PB0800 |
|---|---|---|---|
| **Optics** | | | |
| Haze, % | 2.59 | 1.40 | 1.10 |
| Gloss (@60°) | 75.9 | 85.9 | 85.4 |
| Clarity, % | 5.3 | 24.5 | 17.0 |
| Specimen Thickness m (mil) | 20.32 (0.80) | 18.79 (0.74) | 20.83 (0.82) |
| WVTR, @37.8°C (@100°F) & 90% RH kg/m$^2$/day (g/100 in$^2$/day) | 0.0066 (0.425) @16.51 $\mu$m(0.65 mil) | 0.0074 (0.475) 16.51 $\mu$m(0.65 mil) | 0.0083 (0.535) 16.51 $\mu$m(0.65 mil) |
| (g. mil/100 in$^2$/day) | (0.276) | (0.309) | (0.348) |
| **Mechanical** | | | |
| Tensile, kPa (psi) | 1.63x10$^5$ (23,695) | 1.39x10$^5$ (20,253) | 1.28x10$^5$ (18,599) |
| Elongation, % | 84 | 82 | 88 |
| Modulus, psi (1% Secant) | 2.43x10$^6$ (351,911) | 2.68x10$^6$ (388,472) | 2.14x10$^6$ (309,716) |
| **Stretching** | | | |
| Temperature Window, | 145-160°C(293-320°F) | 142-160°C(289-319°F) | 140-158°C(284-315°F) |

Haze was determined by a haze meter ASTM D1003.
Gloss was determined by ASTM D2457.
Clarity was determined by ASTM, D 1003.
WVTR was determined by ASTM E96.
Tensile was determined by ASTM D882.
Elongation was determined by ASTM D882.
Modulus was determined by ASTM D882.
Stretching Force was determind by the dial reading of the T. M. Long Stretcher.

These samples were stretched on the T. M. Long Stretcher.

## Claims

1. A composition comprising 10 % or less by weight of a low molecular weight, isotactic but-1-ene polymer having a melt index of from 50 to 1000, and at least 90 % by weight of a propylene polymer.

2. A composition according to claim 1 comprising from 0.1 to 1 % by weight of an additive.

3. A composition according to claim 2, wherein the said additive is at least one of a mold release agent, U.V. stabilizer, thermal stabilizer, filler, slip agent, antiblock agent, nucleating agent, pigment, antioxidant or flame retardant.

4. A composition according to any one of the preceding claims wherein the but-1-ene polymer has a melt index of from 150 to 225.

5. A Composition according to any one of the preceding claims wherein the but-1-ene polymer comprises a but-1-ene homopolymer, or a copolymer of but-1-ene and from 1 to 30 mole % of a $C_2$ - $C_8$ $\alpha$-olefin comonomer.

8

6. A composition according to any one of the preceding claims wherein the propylene polymer comprises a propylene homopolymer, or a copolymer of propylene and from 1 to 30 mole % of a $C_2$ or $C_4$ to $C_8$ $\alpha$-olefin comonomer.

7. A composition according to any one of the preceding claims comprising 95 % by weight of the said propylene polymer and 5% by weight of the said but-1-ene polymer.

8. A molded article, a fiber, a film or sheet prepared from a composition as claimed in any one of claims 1 to 7.

9. A molded article according to claim 8 which is a blow-molded article.

10. A laminate comprising a composition as claimed in any one of claims 1 to 7 disposed on a substrate.

**Patentansprüche**

1. Masse, umfassend 10 Gew.-% oder weniger eines niedermolekularen isotaktischen But-1-en-Polymers mit einem Schmelzindex von 50 bis 1000 und mindestens 90 Gew.-% eines Propylen-Polymers.

2. Masse nach Anspruch 1, umfassend 0,1 bis 1 Gew.-% eines Additivs.

3. Masse nach Anspruch 2, wobei das Additiv mindestens ein Entformungsmittel, UV-Stabilisator, thermischen Stabilisator, Füllstoff, Gleitmittel, Antiblockmittel, Kernbildungsmittel, Pigment, Antioxidans und/oder Flammverzögerer ist.

4. Masse nach einem der vorangehenden Ansprüche, wobei das But-1-en-Polymer einen Schmelzindex von 150 bis 225 besitzt.

5. Masse nach einem der vorangehenden Ansprüche, wobei das But-1-en-Polymer ein But-1-en-Homopolymer oder ein Copolymer aus But-1-en und 1 bis 30 mol% eines $C_2$- bis $C_8$-$\alpha$-Olefin-Comonomers umfaßt.

6. Masse nach einem der vorangehenden Ansprüche, wobei das Propylen-Polymer ein Propylen-Homopolymer oder ein Copolymer aus Propylen und 1 bis 30 mol% eines $C_2$- oder $C_4$- bis $C_8$-$\alpha$-Olefin-Comonomers umfaßt.

7. Masse nach einem der vorangehenden Ansprüche, umfassend 95 Gew.-% des Propylen-Polymers und 5 Gew.-% des But-1-en-Polymers.

8. Formkörper, Faser, Film oder Folie, hergestellt aus einer Masse nach einem der Ansprüche 1 bis 7.

9. Formkörper nach Anspruch 8, der durch Blasformen hergestellt worden ist.

10. Laminat, umfassend eine Masse nach einem der Ansprüche 1 bis 7 auf einem Substrat.

**Revendications**

1. Composition contenant 10 % en poids ou moins d'un polymère isotactique de butène-1 de faible masse moléculaire, ayant un indice de fusion compris entre 50 et 1000, et au moins 90 % en poids d'un polymère de propylène.

2. Composition conforme à la revendication 1, comprenant de 0,1 à 1 % en poids d'un additif.

3. Composition conforme à la revendication 2, dans laquelle ledit additif est au moins un agent de démoulage, un stabilisateur UV, un stabilisateur thermique, une charge, un agent lubrifiant, un agent antiadhérent, un agent de nucléation, un pigment, un agent antioxydant ou un agent ignifuge.

4. Composition conforme à une quelconque des revendications précédentes, dans laquelle le polymère de butène-1 a un indice de fusion compris entre 150 et 225.

5. Composition conforme à une quelconque des revendications précédentes dans laquelle le polymère de butène-1 comprend un homopolymère de butène-1, ou un copolymère de butène-1 et de 1 à 30 % en moles d'un comonomère $\alpha$-oléfine en $C_2$-$C_8$.

6. Composition conforme à une quelconque des revendications précédentes, dans laquelle le polymère de propylène comprend un homopolymère de propylène ou un copolymère de propylène et de 1 à 30 % en moles d'un comonomère $\alpha$-oléfine en $C_2$ ou $C_4$ à $C_8$.

7. Composition conforme à une quelconque les revendications précédentes comprenant 95 % en poids dudit polymère de propylène et 5 % en poids dudit polymère de butène-1.

8. Article moulé, fibre, film ou feuille, préparés à partir d'une composition conforme à une des revendications 1 à 7.

9. Article moulé conforme à la revendication 8, qui est un article préparé par moulage par injection.

10. Stratifié comprenant une composition conforme à une quelconque des revendications 1 à 7 disposée sur un substrat.